Europäisches Patentamt

European Patent Office

Office européen des brevets

(11) Veröffentlichungsnummer : **0 448 821 B1**

(12) **EUROPÄISCHE PATENTSCHRIFT**

(45) Veröffentlichungstag der Patentschrift :
25.08.93 Patentblatt 93/34

(51) Int. Cl.⁵ : **B01D 17/05**

(21) Anmeldenummer : **90124853.4**

(22) Anmeldetag : **20.12.90**

(54) **Verfahren zum Auftrennen von Öl-in-Wasser-Emulsionen.**

(30) Priorität : **27.03.90 DE 4009760**

(43) Veröffentlichungstag der Anmeldung :
**02.10.91 Patentblatt 91/40**

(45) Bekanntmachung des Hinweises auf die
Patenterteilung :
**25.08.93 Patentblatt 93/34**

(84) Benannte Vertragsstaaten :
**AT BE CH DE DK ES FR GB IT LI NL SE**

(56) Entgegenhaltungen :
**WO-A-88/07026**
**US-A- 3 691 086**
**US-A- 4 462 913**

(56) Entgegenhaltungen :
**DATABASE WPIL, Nr. 85-105295 [18], Derwent
Publications Ltd, Londen, GB; & CA-A-1 184
865 (BASF WYANDOTTE CORP.)**
**KIRK-OTHMER: "Encyclopedia of Chemical
Technology", Ausgabe 3, Band 10:
"Ferroelectrics to Fluorine Compounds, Organic", 1978, Seite 489, John Wiley & Sons, New
York, US**

(73) Patentinhaber : **BAYER AG**
**D-51368 Leverkusen (DE)**

(72) Erfinder : **Augustin, Thomas, Dr.**
**Ritterstrasse 59**
**W-5000 Köln 1 (DE)**
Erfinder : **Kehlenbach, Rolf**
**Heimstättenweg 37**
**W-5060 Bergisch-Gladbach 2 (DE)**
Erfinder : **Litzinger, Ulrich**
**Bachweg 11**
**W-5238 Hachenburg (DE)**

EP 0 448 821 B1

## Beschreibung

Die Erfindung betrifft ein verbessertes Verfahren zum Auftrennen von Öl-in-Wasser-Emulsionen (= O/W-Emulsion).

Die Auftrennung von O/W-Emulsionen hat technisch eine große Bedeutung, weil in der Praxis, z.B. bei der Erdölförderung und der Metallverarbeitung, große Mengen an O/W-Emulsionen anfallen, die aus ökologischen und ökonomischen Gründen nicht einfach verworfen werden können sondern in eine möglichst reine wäßrige Phase und eine organische Phase aufgetrennt werden müssen, die durch Sekundärspaltung, anderweitige Aufarbeitung oder aber durch Verbrennung beseitigt werden kann.

Bislang wurden zum Auftrennen von O/W-Emulsionen einstufige Verfahren angewendet, bei denen die O/W-Emulsionen entweder mit anorganischen Emulsionsspaltern oder mit organischen kationischen Emulsionsspaltern (siehe z.B. EP-A 186 029) oder aber zunächst mit organischen kationischen Emulsionsspaltern und danach mit anorganischen Emulsionsspaltern versetzt werden (modifizierter Windsor-Prozeß) (P.R.Lawrence, "OILY WASTEWATER TREATMENT AND THE IMPACT OF HIGH WATER CONTENT SYNTHETIC FLUIDS Industrial Waste Conference)

Diese Verfahren genügen den heutigen Ansprüchen jedoch nicht, weil die Spaltung mit anorganischen Emulsionsspaltern relativ große Mengen an anorganischen Emulsionsspaltern, etwa 0,5 bis 1 Gew.-%, bezogen auf das Emulsionsgewicht, erfordert und sehr große Mengen an ölhaltigen metallsalzhaltigen Abfallschlämmen anfallen, deren Beseitigung große Schwierigkeiten bereitet. Bei der Spaltung mit organischen kationischen Emulsionsspaltern werden wäßrige Phasen erhalten, deren Gehalt an Kohlenwasserstoffen >50 mg/l beträgt und damit den zulässigen Wert bei weitem überschreitet, der für Wässer vorgeschrieben ist, die an Vorfluter abgegeben werden dürfen, Ahnliches gilt für den modifizierten Windsor-Prozeß; auch bei diesem werden nur wäßrige Phasen erhalten, deren Gehalt an Kohlenwasserstoffen noch erheblich über dem zulässigen Wert liegt.

Aus der US-PS 4,462,913 ist die Aufarbeitung von Abwässern bekannt, die Fette und Schwermetallionen, insbesondere Kupfer, enthalten. Diese Aufarbeitung findet in einem Kessel statt, wobei zunächst eine Emulsionsspaltung zur Fettentfernung und dann eine Ausfällung von restlichem Fett und Kupferionen durch Zusatz einer Kalziumsulfid enthaltenden Mischung durchgeführt wird. Zusätzlich können bei der Ausfällung mit Kalziumsulfid gegebenenfalls Flockungshilfsmittel eingesetzt werden. Das Durchführen einer zweiten Spaltung der wäßrigen Phase aus der primären Spaltung der Öl-in-Wasser-Emulsion mit speziellen chemischen Spaltmitteln und ohne Fällung von Kupfersulfid kann aus diesem Patent nicht hergeleitet werden.

Überraschenderweise wurde gefunden, daß man eine wirkungsvolle Spaltung von O/W-Emulsionen in eine organische und eine solche wäßrige Phase erhält, deren Gehalt an Kohlenwasserstoffen unter dem zulässigen Gehalt liegt bei gleichzeitig geringem Anfall an anorganischem Rückstand, der außerdem nur in einem geringen Maße durch Öl verunreinigt ist, wenn man die Spaltung mit anorganischen und organischen Emulsionsspaltern zweistufig in der Weise vornimmt, daß man die O/W-Emulsionen zunächst mit einem organischen kationischen Emulsionsspalter, dann mit einem anorganischen Emulsionsspalter versetzt, von dem entstehenden Zweiphasensystem die organische Phase abtrennt und die wäßrige Phase erneut, diesmal aber zunächst mit einem anorganischen Emulsionsspalter und dann mit einem organischen anionischen Emulsionsspalter versetzt.

Die Erfindung betrifft daher ein Verfahren zum Auftrennen von Öl-in-Wasser-Emulsionen (O/W-Emulsionen) durch Behandeln der Emulsionen mit organischen ionischen Emulsionsspaltern und/oder anorganischen Emulsionsspaltern (Flockungsmitteln, Salzen), das dadurch gekennzeichnet ist, daß man die Spaltung zweistufig in der Weise vornimmt, daß man die O/W-Emulsionen zunächst mit einem organischen kationischen Emulsionsspalter, dann mit einem anorganischen Emulsionsspalter versetzt, von dem entstehenden Zweiphasensystem die Ölphase abtrennt und die wäßrige Phase anschließend mit einem anorganischen Emulsionsspalter und mit einem organischen anionischen Emulsionsspalter behandelt. Man kann das erfindungsgemäße Verfahren kontinuierlich und diskontinuierlich durchführen.

In dem erfindungsgemäßen Verfahren werden als anorganische und organische ionische Emulsionsspalter die bekannten anorganischen und organischen ionischen Emulsionsspalter verwendet. Diese werden in der Literatur vielfach auch als Flockungsmittel bezeichnet. Solche Emulsionsspalter (Flockungsmittel) sind z.B. in Kirk-Othmer, Encyclopedia of Technical Chemistry "3. Edition, Vol. 10, Seite 489 ff", beschrieben.

Als anorganische Emulsionsspalter werden im erfindungsgemäßen Verfahren vorzugsweise Salze mehrwertiger Metalle und zwar in der ersten Spaltungsstufe vorzugsweise Salze von Aluminium, Magnesium und/oder Eisen (Eisen-II- und/oder Eisen-III-), z.B. $AlCl_3$, $Al_2(SO_4)_3$, $Fe_2(SO_4)_3$, und in der zweiten Spaltstufe vorzugsweise Salze zweiwertiger Metalle, z.B. $CaCl_2$ und CaO, verwendet.

Die Salze werden in der ersten Spaltstufe in Mengen von 50-1000 ppm, vorzugsweise 100-500 ppm bezogen auf das Gewicht der zu spaltenden O/W-Emulsion, in der zweiten Spaltstufe in Mengen von 200-2000, vorzugsweise 200 bis 1000 ppm, bezogen auf das Gewicht der wäßrigen Phase, eingesetzt.

Als organische anionische Emulsionsspalter werden vorzugsweise die bekannten anionischen Polymere auf Basis von Acrylamid bzw. Acrylester/(Meth)Acrylsäure-Copolymerisaten verwendet. Besonders bevorzugt sind die Copolymerisate mit hoher Molmasse (MG >0,8 Mio) und mittlerer Ionogenität (d.h. einem Gehalt der Copolymerisate an (Meth)Acrylsäure von etwa 30 bis 50 Gew.-%).

Als organische kationische Emulsionsspalter werden vorzugsweise synthetische Polymere auf Basis von Polyaminen, Polyiminen, Polyetherpolyaminen, Polyaminen und Polyamidaminen oder quaternierten Polyaminen und quaternierten Polyamidaminen, ferner kationische Copolymere aus Acrylamid und unterschiedlichen Anteilen kationischer Monomere bzw. Oligomere und Homopolymerisate von Dimethyldiallylammoniumchlorid verwendet (siehe z.B. Kirk Othmer, Encyclopedia of Chemical Technology, 3rd Ed., Vol. 10, S. 489 ff). Besonders bewährt haben sich organische kationische Emulsionsspalter auf Basis von Polyaminen, Polyiminen, Polyetherpolyaminen und Polyamidaminen.

Die organischen kationischen Emulsionsspalter werden bevorzugt in Mengen von 30-5000 ppm, besonders bevorzugt 100-500 ppm bezogen auf das Gewicht der zu spaltenden O/W-Emulsion eingesetzt. Die organischen anionischen Emulsionsspalter werden bevorzugt in Mengen von 0,3 bis 4 ppm, besonders bevorzugt in Mengen von 0,5-2 ppm bezogen auf das Gewicht der wäßrigen Phase, eingesetzt.

Das erfindungsgemäße Verfahren kann wie folgt ausgeführt werden:

1. Stufe:

In die zu spaltende O/W-Emulsion werden gleichzeitig oder nacheinander der organische kationische Emulsionsspalter und der anorganische Emulsionsspalter eingerührt. Nach einer gewissen Zeit, der Aufrahmzeit, wird die aufrahmende organische Phase, die Öl und Flocken enthält, abgetrennt. Sie kann z.B. durch eine Sekundärspaltung (W/O-Emulsionsspaltung) aufgearbeitet oder als solche verbrannt werden.

2. Stufe:

In die wäßrige Phase werden anschließend nacheinander zuerst der anorganische Emulsionsspalter und dann der organische anionische Emulsionsspalter eingerührt. Nach dem Absetzen des Rückstandes wird die klare wäßrige Phase vom festen Rückstand getrennt. Sie kann häufig ohne weitere Behandlung dem Vorfluter zugeführt werden.

Das erfindungsgemäße Verfahren eignet sich zur Spaltung von O/W-Emulsionen verschiedenster Herkunft und Zusammensetzung, z.B. von Kühl-Schmiermittel- und Walzöl-Emulsionen, Rohöl/Wasser-Emulsionen, Emulsionen, wie sie z.B. als Waschlaugen, Entfettungsbäder, in Lackiereriabwässern, ölhaltigen Kondensaten, Tankreinigungsabwässern, Bilgenwässern und Slop-Ölen anfallen sowie von Emulsionen, wie sie bei der Verarbeitung tierischer und pflanzlicher Produkte und in den Abwässern von Brauereien, Brennereien und papiererzeugender und papierverarbeitender Betriebe anfallen.

Beispiel 1

Eine als Kühlschmiermittel verwendete O/W-Emulsion wird unter Rühren zunächst mit 0,02 Gew.-% des nachstehend beschriebenen kationischen Flockungsmittels K 1 und 0,02 Gew.-% einer 30 gew.-%igen AlCl₃-Lösung versetzt. Nach einer Aufrahmzeit von einer Stunde wird die organische Phase abgetrennt. Die Wasserphase wird anschließend unter Rühren nacheinander zuerst mit 0,06 Gew.-% Calciumoxid und dann mit 1,0 ppm des anionischen Flockungsmittel A 1 [Praestol 2540; Handelsprodukt der Fa. Stockhausen; hochmolekulares Acrylamid/ (Meth)Acrylsäure-Copolymerisat (Gehalt an (Meth)Acrylsäure: etwa 40 Gew.-%, bezogen auf das Gewicht des Copolymer)] versetzt.

Die nach dem Abstellen des Rührers und Absetzen der Feststoffe vorliegende klare Wasserphase weist nur noch einen Restöl-Gehalt von 18 ppm auf. Die Schlammrückstands-Menge beträgt nur 0,1 Gew.-% bezogen auf das Gewicht der wäßrigen Phase.

In der nachstehenden Tabelle sind die Ergebnisse (Restgehalt der Wasserphasen an Kohlenwasserstoffen [mg/l], (visuell bestimmte) Wasserqualität, Anfall an Rückstand (Schlamm) [Gew.-%] bezogen auf das Gewicht der O/W-Emulsion; erreichte Herabsetzung der Schlamm-Menge [%] bezogen auf die Menge an anfallendem Schlamm bei der anorganischen Emulsionsspaltung (Vergleichsbeispiel A)) zusammengestellt, die man erhält, wenn man die als Kühlschmiermittel verwendete O/W-Emulsion in bekannter Weise (Vergleichsbeispiele A, B, C) und in erfindungsgemäßer Weise (Beispiele 1-6) mit den in der Tabelle angegebenen anorganischen und/oder organischen Emulsionsspaltern (Flockungsmitteln) in den in der Tabelle angegebenen Mengen in der ebenfalls aus der Tabelle hervorgehenden Weise (1- oder 2-stufig) behandelt.

Wurden die in den Beispielen 1 und 2 verwendeten organischen und anorganischen Emulsionsspalter der O/W-Emulsion in der beschriebenen Reihenfolge aber ohne zwischenzeitliche Abtrennung der wäßrigen Phase, d.h. in einstufiger Arbeitsweise, zugesetzt, so wurde keine Spaltung der Emulsion erreicht.

Bei den in den Beispielen B, C und 1-6 verwendeten organischen kationischen Emulsionensspaltern K 1, K 2, K 3, K 4 und K 5 handelt es sich um folgende Produkte:

K 1: Polyamidamin, erhalten durch Umsetzung des Kondensationsproduktes aus Adipinsäure und Diethylentriamin mit einem Gemisch niedermolekularer Polyethylenpolyamine und 1,2-Dichlorethan gemäß EP-B2 0 002 474 (Polyamin 2).

K 2: Polyamidamin, erhalten durch Umsetzung des Kondensationsproduktes aus Adipinsäure und Diethylentriamin mit 1,2-Dichlorethan gemäß EP-B1 0 003 499, Beispiel IIIa.

K 3: Polyamin, erhalten durch Kondensation von Diethylentriamin mit 1,2- Dichlorethan analog Beispiel 6 der GB-PS 775 721.

K 4: Polyamin, Umsetzungsprodukt aus Bisaminopropylmethylamin und 1,2-Dichlorethan, erhältlich gemäß Beispiel 6 der GB-PS 775 721.

K 5: Polyetherpolyamidamin, Umsetzungsprodukt gemäß EP-A 0 000 714, Beispiel 5c, aus einem Polyetheramin und einem basischen Polyamid.

## Tabelle

| Beispiel | 1. Spaltung org.kation. Spaltmittel | Menge Gew.-% | anorg. Spaltmittel | Menge Gew.-% | 2. Spaltung anorg. Spaltmittel | Menge Gew.-% | org. anion. Spaltmittel | Menge ppm | Restgehalt an KWSt (mg/l) | Wasserqualität | Rückstandsmenge Gew.-% | Rückstandsmenge [%] * |
|---|---|---|---|---|---|---|---|---|---|---|---|---|
| A (anorganische Spaltung) | -/- | -/- | $FeSO_4$ x $H_2O$/CaO | 0,64 | -/- | -/- | -/- | -/- | 32 | klar | 1,4 | -/- |
| B (organische Spaltung) | K 1 | 0,15 | -/- | -/- | -/- | -/- | -/- | -/- | 410 | trübe | -/- | -/- |
| C (modifizierter Windsor-Prozeß) | K 1 | 0,05 | $AlCl_3$ | 0,02 | -/- | -/- | -/- | -/- | 78 | fast klar | -/- | -/- |

* bezogen auf die in A anfallende Rückstandsmenge

EP 0 448 821 B1

Tabelle - Fortsetzung

| Beispiel | 1. Spaltung org.kation. Spaltmittel | Menge Gew.-% | anorg. Spaltmittel | Menge Gew.-% | 2. Spaltung anorg. Spaltmittel | Menge Gew.-% | org. anion. Spaltmittel | Menge ppm | Restgehalt an KWSt (mg/l) | Wasserqualität | Rückstandsmenge Gew.-% | Rückstandsmenge [%] * |
|---|---|---|---|---|---|---|---|---|---|---|---|---|
| 1 | K 1 | 0,02 | $AlCl_3$ | 0,02 | CaO | 0,06 | A 1 | 1,0 | 18 | klar | 0,1 | 7 |
| 2 | K 2 | 0,05 | $AlCl_3$ | 0,03 | $CaCl_2$/ NaOH | 0,01 0,01 | A 1 | 1,0 | 19 | klar | 0,11 | 8 |
| 3 | K 3 | 0,05 | $AlCl_3$ | 0,02 | NaOH/ $MgCl_2$ | 0,05 0,1 | A 1 | 1,0 | 19 | klar | 0,28 | 20 |
| 4 | K 4 | 0,05 | $AlCl_3$ | 0,02 | NaOH/ $FeSO_4$ | 0,04 0,1 | A 1 | 1,0 | 20 | klar | 0,2 | 15 |
| 5 | K 5 | 0,05 | $AlCl_3$ | 0,02 | NaOH/ $AlCl_3$ | 0,15 0,1 | A 1 | 1,0 | 19 | klar | 0,1 | 7 |
| 6 | K 1 | 0,05 | $AlCl_3$ | 0,02 | NaOH/ $Ce(SO_4)_2$ | 0,045 | A 1 | 1,0 | 20 | klar | 0,15 | 11 |

* bezogen auf die in A anfallende Rückstandmenge

EP 0 448 821 B1

**Patentansprüche**

1. Verfahren zum Auftrennen von Öl-in-Wasser-Emulsionen durch Behandeln der Emulsionen mit organischen ionischen Emulsionsspaltern und anorganischen Emulsionsspaltern, wobei man die Spaltung zweistufig in der Weise vornimmt, daß man die O/W-Emulsionen zunächst mit einem organischen kationischen Emulsionsspalter, dann mit einem anorganischen Emulsionsspalter versetzt, von dem entstehenden Zweiphasensystem die Ölphase abtrennt und die wäßrige Phase anschließend mit einem anorganischen Emulsionsspalter und mit einem organischen anionischen Emulsionsspalter behandelt.

2. Verfahren nach Anspruch 1, dadurch gekennzeichnet, daß man als organische kationische Emulsionsspalter synthetische Polymere auf Basis von Polyaminen, Polyiminen, Polyetherpolyaminen und Polyamidaminen verwendet.

3. Verfahren nach Anspruch 1 oder 2, dadurch gekennzeichnet, daß man als anorganische Emulsionsspalter in der ersten Spaltstufe Salze mehrwertiger Metalle einsetzt.

4. Verfahren nach Anspruch 3, dadurch gekennzeichnet, daß man Aluminium-, Magnesium- und/oder Eisen-Salze einsetzt.

5. Verfahren nach einem der Ansprüche 1 bis 4, dadurch gekennzeichnet, daß man als anorganische Emulsionsspalter in der zweiten Spaltstufe Salze zweiwertiger Metalle einsetzt.

6. Verfahren nach Anspruch 5, dadurch gekennzeichnet, daß man Kalzium- oder Magnesiumsalze einsetzt.

7. Verfahren nach einem der Ansprüche 1 bis 6, dadurch gekennzeichnet, daß man als organische anionische Emulsionsspalter Acrylamid/(Meth)Acrylsäure-Copolymerisate hoher Molmasse und mittlerer Ionogenität verwendet.


**Claims**

1. Process for the separation of oil-in-water emulsions by treatment of the emulsions with organic ionic demulsifiers and inorganic demulsifiers, whereby the separation is carried out in two steps such that the o/w emulsions are first treated with an organic cationic demulsifier followed by an inorganic demulsifier, the oil phase is separated off from the resulting two-phase system and the aqueous phase is then treated with an inorganic demulsifier and with an organic anionic demulsifier.

2. Process according to Claim 1, characterised in that the organic cationic demulsifiers used are synthetic polymers based on polyamines, polyimines, polyetherpolyamines and polyamideamines.

3. Process according to Claim 1 or 2, characterised in that the inorganic demulsifiers used in the first separation step are salts of polyvalent metals.

4. Process according to Claim 3, characterised in that use is made of aluminium salts, magnesium salts and/or iron salts.

5. Process according to any one of Claims 1 to 4, characterised in that the inorganic demulsifiers used in the second separation step are salts of divalent metals.

6. Process according to Claim 5, characterised in that use is made of calcium salts or magnesium salts.

7. Process according to any one of Claims 1 to 6, characterised in that the organic anionic demulsifiers used are acrylamide/(meth)acrylic acid copolymers of high molecular weight and average ionic character.


**Revendications**

1. Procédé de séparation d'émulsions huile-dans-l'eau par traitement des émulsions avec des séparateurs d'émulsion ioniques organiques et des séparateurs d'émulsion inorganiques de sorte que la séparation s'effectue dans un procédé en 2 étapes de sorte que les émulsions huile-dans-l'eau soient d'abord mélangées avec un séparateur d'émulsion cationique organique et ensuite avec un séparateur d'émulsion inorganique, la phase huileuse étant séparée du système diphasique ainsi formé et la phase aqueuse étant ensuite traitée avec un séparateur d'émulsion inorganique et un séparateur d'émulsion anionique organique.

2. Procédé selon la revendication 1, caractérisé en ce que des polymères synthétiques à base de polyamines, polyimines, polyétherpolyamines et polyamidamines sont utilisés comme séparateurs d'émulsion cationiques organiques.

3. Procédé selon la revendication 1 ou 2, caractérisé en ce que des sels de métaux polyvalents sont utilisés comme séparateur d'émulsion inorganique dans la première étape de séparation.

4. Procédé selon la revendication 3, caractérisé en ce que des sels d'aluminium, de magnésium et/ou de fer sont utilisés.

5. Procédé selon une des revendications 1 à 4, caractérisé en ce que des sels de métaux bivalents sont utilisés comme séparateur d'émulsion inorganique dans la deuxième étape de séparation.

6. Procédé selon la revendication 5, caractérisé en ce que des sels de calcium ou de magnésium sont utilisés.

7. Procédé selon une des revendications 1 à 6, caractérisé en ce que des copolymères acrylamide/acide (méth)acrylique de masse molaire élevée et de caractère ionogène moyen sont utilisés comme séparateur d'émulsion anionique organique.